# EUROPEAN PATENT APPLICATION

(11) **EP 3 796 445 A1**
(43) Date of publication of application: **24.03.2021**
(21) Application number: 19802504.1
(22) Date of filing: 09.05.2019
(51) Int. Cl.: H01M 10/04, H01M 10/0565, H01M 10/0585

(54) **METHOD FOR MANUFACTURING BATTERY MEMBER FOR SECONDARY BATTERY, AND SECONDARY BATTERY**

(30) Priority: 14.05.2018 JP 2018093056
(71) Applicant: Showa Denko Materials Co., Ltd., Tokyo 100-6606 (JP)
(72) Inventor: SERA Yusuke, Tokyo 100-6606 (JP); OGAWA Hideyuki, Tokyo 100-6606 (JP)
(74) Representative: Hoffmann Eitle
(86) International application number: PCT/JP2019/018607
(87) International publication number: WO 2019/221010

(57) **Abstract**

One aspect of the present invention provides a manufacturing method of a battery member for a secondary battery including fabricating a laminated body by providing an electrolyte material layer between a pair of electrode material layers, and collectively cutting the laminated body.

## Description

### Technical Field

The present invention relates to a manufacturing method of a battery member for a secondary battery, and a secondary battery.

### Background Art

In recent years, with the spread of portable electronic devices, electric vehicles, and the like, high-performance secondary batteries have come to be required. Among them, lithium secondary batteries have a high energy density and are therefore utilized as a power supply for portable electronic devices, electric vehicles, and the like.

For example, in an 18650-type lithium secondary battery, a wound electrode body is housed inside a cylindrical battery can. "Wound electrode body" refers to an electrode body formed by sandwiching a microporous separator between a positive electrode and a negative electrode and winding them in a spiral shape. Since the separator in the wound electrode body is impregnated with a combustible electrolytic solution, for example, when a temperature of the battery rises rapidly in an abnormal situation, there is a likelihood that the lithium secondary battery will burst and the electrolytic solution will ignite due to vaporization of the electrolytic solution and an increase in internal pressure. Preventing the lithium secondary battery from bursting and igniting is important in design of lithium secondary batteries. That is, in the lithium secondary battery, further improvement in safety is demanded in addition to achieving further increase in energy density and size in the future.

Development of all-solid-state batteries is underway as a fundamental solution to improve safety of lithium secondary batteries. In all-solid-state batteries, a layer of a solid electrolyte such as a polymer electrolyte or an inorganic solid electrolyte is provided on an electrode mixture layer in place of an electrolytic solution (for example, Patent Literature 1).

### Citation List

### Patent Literature

[Patent Literature 1] Japanese Unexamined Patent Publication No. 2006-294326

### Summary of Invention

### Technical Problem

A laminate-type secondary battery, which is one type of all-solid-state battery, includes an electrode group in which electrode layers (a positive electrode layer and a negative electrode layer) and a solid electrolyte layer are formed in sheet shapes and these layers are laminated. Conventionally, when such an electrode group was manufactured, electrode layers and an electrolyte layer were each formed into a desired shape and then the layers were laminated.

However, in this method, since a step of forming a layer is required for each layer, the number of steps at the time of manufacturing tends to increase and manufacturing costs also tend to increase. Also, when a secondary battery having a complicated shape is intended to be fabricated, electrode layers and an electrolyte layer are each formed into a complicated shape and then all the layers need to be laminated without any positional deviation, but this is difficult in reality.

Therefore, an objective of the present invention is to provide a manufacturing method of a battery member for a secondary battery and a manufacturing method of a secondary battery in which even a secondary battery having a complicated shape can be easily manufactured and manufacturing costs can be suppressed, a battery member obtained by the method, and a secondary battery including the battery member.

### Solution to Problem

The present invention provides, as a first aspect, a manufacturing method of a battery member for a secondary battery comprising fabricating a laminated body by providing an electrolyte material layer between a pair of electrode material layers, and collectively cutting the laminated body.

According to the manufacturing method, since the battery member including the electrode layer and the electrolyte layer is manufactured by laminating the electrode material layer and the electrolyte material layer and then cutting them collectively, positional deviations between the layers caused after the lamination can be eliminated. As a result, even when a secondary battery has a complicated shape, the secondary battery including a battery member in which positional deviations between layers are suppressed can be easily manufactured. Also, according to the manufacturing method, since the battery member can be manufactured by collectively cutting the laminated body, the number of steps for manufacturing the battery member can be reduced, and manufacturing costs can be curtailed.

In the first aspect, the cutting may be mechanical cutting. Thereby, adhesion of cut portions of the electrode layer and the electrolyte layer to each other can be suppressed in the obtained battery member.

The present invention provides, as a second aspect, a manufacturing method of a secondary battery comprising housing the battery member obtained by the above-described manufacturing method in an exterior body.

In this manufacturing method, a secondary battery having a complicated shape can be easily manufactured by using the battery member described above. Also, according to reduction in the number of steps for manufacturing the battery member, the number of steps for manufacturing the secondary battery can also be reduced, and manufacturing costs thereof can also be reduced.

The present invention provides, as a third aspect, a battery member which is a battery member for a secondary battery comprising a pair of electrode layers, and an electrolyte layer provided between the electrode layers, in which an end surface of the battery member when the battery member is viewed from a direction perpendicular to a lamination direction forms a substantially continuous surface.

The present invention provides, as a fourth aspect, a secondary battery including the battery member described above, and an exterior body configured to house the battery member.

In the first to fourth aspects, the electrolyte layer preferably contains a polymer, an electrolyte salt, and a solvent. Thereby, the electrolyte layer can be more easily cut, and damage to the electrolyte layer due to the cutting can be suppressed.

### Advantageous Effects of Invention

According to the present invention, it is possible to provide a manufacturing method of a battery member for a secondary battery and a manufacturing method of a secondary battery in which even a secondary battery having a complicated shape can be easily manufactured and manufacturing costs can be suppressed, a battery member obtained by the method, and a secondary battery including the battery member.

### Brief Description of Drawings

FIG 1 illustrates schematic cross-sectional views showing a battery member fabrication step in a manufacturing method of a secondary battery according to a first embodiment.
FIG 2(a) is a schematic cross-sectional view illustrating a main part of a battery member obtained by a conventional manufacturing method of a secondary battery, and FIG 2(b) is a schematic cross-sectional view illustrating a main part of the battery member obtained by the manufacturing method of the first embodiment.
FIG 3 is a perspective view illustrating an example of a secondary battery obtained by the manufacturing method of the first embodiment.
FIG 4 illustrates schematic cross-sectional views of battery members obtained in a manufacturing method of a secondary battery according to a modified example of the first embodiment.
FIG 5 illustrates schematic cross-sectional views of battery members obtained in a manufacturing method of a secondary battery according to another modified example of the first embodiment.
FIG 6 illustrates schematic cross-sectional views of battery members obtained in a manufacturing method of a secondary battery according to another modified example of the first embodiment.
FIG 7 illustrates schematic cross-sectional views showing a battery member fabrication step in a manufacturing method of a secondary battery according to a second embodiment.

### Description of Embodiments

Hereinafter, embodiments of the present invention will be described with reference to the drawings as appropriate. However, the present invention is not limited to the following embodiments. In the following embodiments, constituent elements (including steps or the like) thereof are not indispensable unless otherwise specified. Sizes of the constituent elements in the drawings are conceptual, and relative relationships between sizes of the constituent elements are not limited to those illustrated in the drawings.

Numerical values and ranges thereof in the present specification in no way limit the present invention. In the present specification, a numerical range denoted by "to" indicates a range including numerical values described before and after "to" as a minimum value and a maximum value, respectively. In numerical ranges described stepwise in the present specification, an upper limit value or a lower limit value described in one numerical range may be replaced with another upper limit value or lower limit value described stepwise.

In this specification, the following abbreviations are used in some cases.
[FSI]⁻: Bis(fluorosulfonyl)imide anion
[TFSI]⁻: Bis(trifluoromethanesulfonyl)imide anion
[f3C]⁻: Tris(fluorosulfonyl)carbanion
[BOB]⁻: Bis oxalate borate anion

### [First embodiment]

A manufacturing method of a secondary battery according to a first embodiment will be described. In the manufacturing method, first, a battery member for a secondary battery is fabricated (battery member fabrication step). The battery member for a secondary battery (hereinafter, also simply referred to as "battery member") in the present specification is a battery member (an electrode group) including at least a pair of electrode layers and an electrolyte layer provided between the electrode layers. In the present specification, "electrode" indicates a positive electrode or a negative electrode, and the same applies to similar expressions such as "electrode layer" or "electrode mixture layer." Also, "a pair of electrode layers" indicates electrodes having different polarities from each other and facing each other with an electrolyte layer sandwiched therebetween.

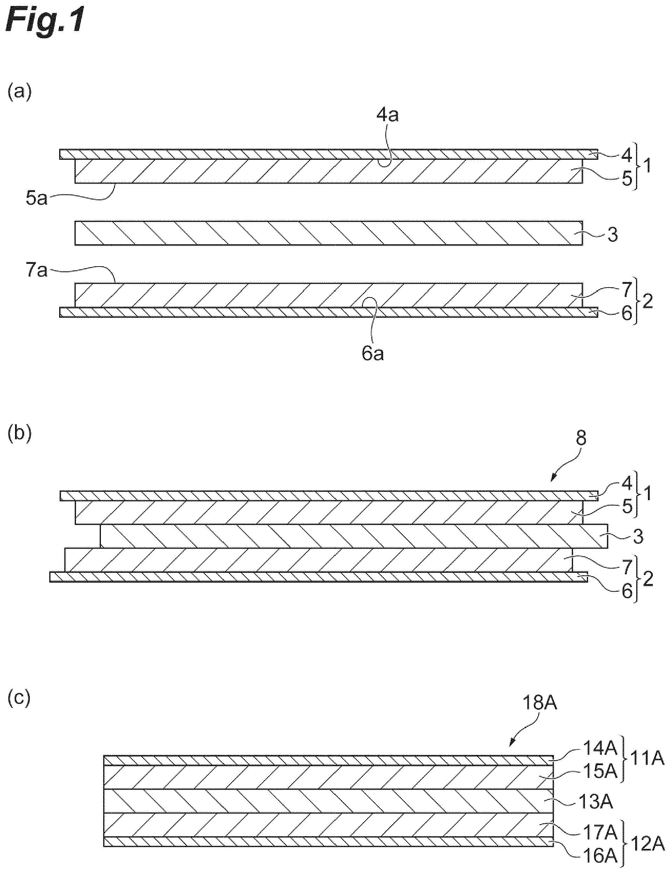

FIG. 1 illustrates schematic cross-sectional views showing a battery member fabrication step in a manufacturing method of a secondary battery according to the first embodiment. In the battery member fabrication step, first, as illustrated in FIGS. 1(a) and 1(b), an electrolyte material layer 3 is provided between a pair of electrode material layers (between a positive electrode material layer 1 and a negative electrode material layer 2) to fabricate a laminated body 8 (laminated body fabrication step).

In the laminated body fabrication step, in one embodiment, first, the positive electrode material layer 1, the negative electrode material layer 2, and the electrolyte material layer 3 are each fabricated as illustrated in FIG. 1(a).

In one embodiment, the positive electrode material layer 1 is fabricated by forming a positive electrode mixture layer 5 on one surface 4a of a positive electrode current collector 4.

The positive electrode current collector 4 may be a metal such as aluminum, titanium, or tantalum, or an alloy thereof. The positive electrode current collector 4 is preferably aluminum or an alloy thereof in order for it to be lightweight and have a high weight energy density. A thickness of the positive electrode current collector 4 may be 10 µm or more and 100 µm or less.

The positive electrode mixture layer 5 contains at least a positive electrode active material. A thickness of the positive electrode mixture layer 5 may be 10 µm or more, 15 µm or more, or 20 µm or more, and may be 100 µm or less, 80 µm or less, or 70 µm or less.

The positive electrode active material may be a lithium transition metal compound such as a lithium transition metal oxide or a lithium transition metal phosphate. The lithium transition metal oxide may be, for example, lithium manganese oxide, lithium nickel oxide, lithium cobalt oxide, or the like.

The positive electrode mixture layer 5 may further contain a conductive agent, a binding agent, an ionic liquid, an electrolyte salt or the like as other components. The conductive agent is not particularly limited, and may be a carbon material such as graphite, acetylene black, carbon black, carbon fibers, or the like. The binding agent is not particularly limited, and may be a polymer containing at least one selected from the group consisting of tetrafluoroethylene, vinylidene fluoride, hexafluoropropylene, acrylic acid, maleic acid, ethyl methacrylate, and methyl methacrylate as a monomer unit, or a rubber such as styrene-butadiene rubber, isoprene rubber, acrylic rubber, or the like. The ionic liquid and the electrolyte salt may be the same as an ionic liquid and an electrolyte salt used in the electrolyte material layer 3 to be described below, respectively.

In one embodiment, a method of forming the positive electrode mixture layer 5 on the one surface 4a of the positive electrode current collector 4 is a method of applying a positive electrode mixture slurry in which a material of the positive electrode mixture layer 5 is dispersed in a dispersion medium onto the one surface 4a of the positive electrode current collector 4. The dispersion medium may be water or an organic solvent. The organic solvent may be N-methyl-2-pyrrolidone (NMP), N,N-dimethylacetamide, methyl ethyl ketone, toluene, 2-butanol, cyclohexanone, ethyl acetate, 2-propanol, or the like.

As a method of applying the positive electrode mixture slurry, a method of applying it using an applicator, a method of applying it by spraying, or the like can be exemplified. After the positive electrode mixture slurry is applied, the dispersion medium in the positive electrode mixture slurry is volatilized away, and thereby the positive electrode mixture layer 5 is formed. A method of volatilizing the dispersion medium may be, for example, a method of drying by heating, a method of depressurizing, a method of combining depressurizing and heating, or the like. Thereby, the positive electrode material layer 1 having a sheet shape in which the positive electrode mixture layer 5 is formed on the one surface 4a of the positive electrode current collector 4 is fabricated.

In one embodiment, the negative electrode material layer 2 is fabricated by forming a negative electrode mixture layer 7 on one surface 6a of the negative electrode current collector 6.

The negative electrode current collector 6 may be a metal such as aluminum, copper, nickel, or stainless steel, or an alloy thereof. A thickness of the negative electrode current collector 6 may be 10 µm or more and 200 µm or less.

The negative electrode mixture layer 7 contains at least a negative electrode active material. A thickness of the negative electrode mixture layer 7 may be 10 µm or more, 15 µm or more, or 20 µm or more, and may be 60 µm or less, 55 µm or less, or 50 µm or less.

The negative electrode active material may be metallic lithium, lithium titanate (Li₄Ti₅O₁₂), a lithium alloy or another metallic compound, a carbon material, a metal complex, an organic polymer compound, or the like. As the carbon material, graphite including natural graphite (flaky graphite or the like), artificial graphite, or the like, amorphous carbon, carbon fibers, carbon black such as acetylene black, Ketjen black, channel black, furnace black, lamp black, thermal black, or the like can be exemplified. The negative electrode active material may be silicon, tin, or a compound (an oxide, a nitride, an alloy with another metal) containing these elements from the viewpoint of obtaining a larger theoretical capacity (for example, 500 to 1500 Ah/kg).

The negative electrode mixture layer 7 may further contain a conductive agent, a binding agent, an ionic liquid, an electrolyte salt, or the like that can be used in the positive electrode mixture layer 5 described above as other components.

A method of forming the negative electrode mixture layer 7 on the one surface 6a of the negative electrode current collector 6 may be the same as the method of forming the positive electrode mixture layer 5 on the one surface 4a of the positive electrode current collector 4. Thereby, the negative electrode material layer 2 having a sheet shape is fabricated.

In one embodiment, the electrolyte material layer 3 can be obtained as an electrolyte sheet in which an electrolyte material layer is formed on a base material by dispersing the material used for the electrolyte material layer 3 in a dispersion medium to obtain a slurry-like electrolyte composition, applying the slurry-like electrolyte composition on the base material, and then volatilizing the dispersion medium. The base material used when the electrolyte sheet is fabricated may be a film formed of a resin such as polytetrafluoroethylene. The dispersion medium may be the same as the dispersion medium that can be used for the positive electrode mixture slurry described above. The electrolyte material layer 3 can be obtained by peeling the base material off of the electrolyte sheet.

In one embodiment, the electrolyte composition contains a polymer, an electrolyte salt, and a solvent. When these components are contained in the electrolyte composition, the electrolyte layer can be more easily cut and damage to the electrolyte layer due to the cutting can be suppressed in a cutting step to be described below.

The polymer preferably has a first structural unit selected from the group consisting of tetrafluoroethylene and vinylidene fluoride.

The polymer is preferably a polymer of one polymer, or two or more polymers, and structural units constituting the polymer of one polymer, or two or more polymers may include the first structural unit described above, and a second structural unit selected from the group consisting of hexafluoropropylene, acrylic acid, maleic acid, ethyl methacrylate, and methyl methacrylate. That is, the first structural unit and the second structural unit may be contained in one polymer to form a copolymer, or may each be contained in different polymers to form at least two polymers including a first polymer having the first structural unit and a second polymer having the second structural unit.

Specifically, the polymer may be polytetrafluoroethylene, polyvinylidene fluoride, a copolymer of vinylidene fluoride and hexafluoropropylene, or the like.

The polymer may be a polyether-based polymer such as polyethylene oxide, a polycarbonate-based polymer such as polyethylene carbonate, an acrylic polymer such as poly methyl methacrylate, a nitrile-based polymer such as polyacrylonitrile, or an ionic polymer such as poly(diallyldimethylammonium)-bis (trifluoromethanesulfonyl)imide. These polymers may be homopolymers or copolymers containing structural units that form these polymers.

A content of the polymer is preferably 3% by mass or more with respect to a total amount of the electrolyte composition. The content of the polymer is preferably 50% by mass or less, and more preferably 40% by mass or less with respect to the total amount of the electrolyte composition.

The electrolyte salt is preferably at least one selected from the group consisting of lithium salts, sodium salts, calcium salts, and magnesium salts. The electrolyte salt may be a salt of a cation component that is a lithium cation, a sodium cation, a calcium cation, or a magnesium cation, and the following anion component.

The anion component of the electrolyte salt may be a halide ion (I⁻, Cl⁻, Br⁻, or the like), SCN⁻, BF₄⁻, BF₃(CF₃)⁻, BF₃(C₂F₅)⁻, PF₆⁻, ClO₄⁻, SbF₆⁻, N(SO₂F)₂⁻, N(SO₂CF₃)₂⁻, N(SO₂C₂F₅)₂⁻, N(SO₂C₄F₉)₂⁻, B(C₆H₅)₄⁻, B(O₂C₂H₄)₂⁻, C(SO₂F)₃⁻, C(SO₂CF₃)₃⁻, CF₃COO⁻, CF₃SO₂O⁻, C₆F₅SO₂O⁻, B(O₂C₂O₂)₂⁻, or the like.

A content of the electrolyte salt may be 10% by mass or more and 60% by mass or less with respect to the total amount of the electrolyte composition.

The solvent may be at least one selected from the group consisting of a glyme and an ionic liquid.

The glyme may be a compound represented by the following general expression (1).

R¹O-(CH₂CH₂O)ₙ-R² (1)

In expression (1), R¹ and R² each represent an alkyl group having 4 or less carbon atoms or a fluoroalkyl group having 4 or less carbon atoms, and n represents an integer of 1 to 6. It is preferable that R¹ and R² each be any of CH₃ and C₂H₅.

Specifically, the glyme may be monoglyme (n=1), diglyme (n=2), triglyme (n=3), tetraglyme (n=4), pentaglyme (n=5), or hexaglyme (n=6).

When the electrolyte composition contains a glyme as a solvent, a part or all of the glyme may form a complex with the electrolyte salt.

The ionic liquid contains the following anion component and cation component. Further, the ionic liquid in the present specification is a substance in a liquid state at -20 °C or higher.

The anion component in the ionic liquid is not particularly limited, and may be a halogen anion such as Cl⁻, Br⁻, or I⁻, an inorganic anion such as BF₄⁻ or N(SO₂F)₂⁻, an organic anion such as B(C₆H₅)₄⁻, CH₃SO₂O⁻, CF₃SO₂O⁻, N(SO₂F)₂⁻, N(SO₂C₄F₉)₂⁻, N(SO₂CF₃)₂⁻, or N(SO₂C₂F₅)₂⁻, or the like.

The cation component of the ionic liquid is preferably at least one selected from the group consisting of a chain quaternary onium cation, a piperidinium cation, a pyrrolidinium cation, a pyridinium cation, and an imidazolium cation.

The solvent may be a cyclic carbonate such as propylene carbonate or ethylene carbonate, a chain carbonate such as dimethyl carbonate or ethyl methyl carbonate, a plastic crystal such as succinonitrile, or the like.

A content of the solvent may be 10% by mass or more and 60% by mass or less with respect to the total amount of the electrolyte composition. A total content of the electrolyte salt and the solvent may be 10% by mass or more and 80% by mass or less with respect to the total amount of the electrolyte composition.

The electrolyte composition may further contain oxide particles as necessary. The oxide particles may be, for example, particles of an inorganic oxide. The inorganic oxide may be an inorganic oxide containing, for example, Li, Mg, Al, Si, Ca, Ti, Zr, La, Na, K, Ba, Sr, V, Nb, B, Ge, or the like as a constituent element. The oxide particles are preferably at least one type of particles selected from the group consisting of SiO₂, Al₂O₃, AlOOH, MgO, CaO, ZrO₂, TiO₂, Li₇La₃Zr₂O₁₂, and BaTiO₃. The oxide particles may be of a rare earth metal oxide.

An average particle diameter of the oxide particles is preferably 0.005 µm or more, more preferably 0.01 µm or more, and still more preferably 0.03 µm or more. The average particle diameter of the oxide particles is preferably 5 µm or less, more preferably 3 µm or less, and still more preferably 1 µm or less. The average particle diameter of the oxide particles is measured by a laser diffraction method and corresponds to a particle diameter at which a cumulative volume is 50% when a volume cumulative particle size distribution curve is drawn from a small particle diameter side.

A content of the oxide particles, with respect to the total amount of the electrolyte composition, is preferably 5% by mass or more, more preferably 10% by mass or more, still more preferably 15% by mass or more, and particularly preferably 20% by mass or more, and is preferably 60% by mass or less, more preferably 50% by mass or less, and still more preferably 40% by mass or less.

The method of applying the electrolyte composition on the base material and then volatilizing the dispersion medium may be the same as the method of applying the positive electrode mixture slurry on the one surface 4a of the positive electrode current collector 4. Thereby, the electrolyte sheet in which the electrolyte material layer is formed on the base material can be obtained.

Planar shapes of the positive electrode material layer 1, the negative electrode material layer 2, and the electrolyte material layer 3 obtained by the above-described methods may be any shapes such as rectangular shapes, polygonal shapes, circular shapes, or elliptical shapes. Planar shapes of the layers may be the same as each other or different from each other.

Next, as illustrated in FIG. 1(b), the electrolyte material layer 3 is provided between the positive electrode material layer 1 and the negative electrode material layer 2 to fabricate the laminated body 8. That is, the base material is peeled off of the electrolyte sheet obtained by the method described above, and the electrolyte material layer 3 is sandwiched between the positive electrode material layer 1 and the negative electrode material layer 2 to fabricate the laminated body 8. After the laminated body 8 is fabricated, a pressure treatment may be performed using a pressing machine or the like.

In the laminated body fabrication step, in another embodiment, the electrolyte material layer 3 may be formed on at least one of a surface 5a of the positive electrode material layer 1 on the positive electrode mixture layer 5 side and a surface 7a of the negative electrode material layer 2 on the negative electrode mixture layer 7 side to fabricate the laminated body 8.

As a method of forming the electrolyte material layer 3 on the surface 5a of the positive electrode material layer 1 on the positive electrode mixture layer 5 side, the above-described electrolyte material layer 3 obtained by peeling the base material off of the electrolyte sheet may be laminated on the surface 5a of the positive electrode material layer 1 on the positive electrode mixture layer 5 side. Alternatively, the above-described electrolyte composition may be applied on the surface 5a of the positive electrode material layer 1 on the positive electrode mixture layer 5 side and then the dispersion medium may be volatilized without fabricating the electrolyte sheet. Thereby, a laminated body (a laminated body of the positive electrode material layer-electrolyte material layer) in which the positive electrode current collector 4, the positive electrode mixture layer 5, and the electrolyte material layer 3 are provided in that order can be obtained. In this case, the laminated body 8 can be obtained by laminating the laminated body of the positive electrode material layer-electrolyte material layer and the negative electrode material layer 2 such that the electrolyte material layer 3 and the negative electrode mixture layer 7 are in contact with each other.

A method of forming the electrolyte material layer 3 on the surface 7a of the negative electrode material layer 2 on the negative electrode mixture layer 7 side may be the same as the method of forming the electrolyte material layer 3 on the surface 5a of the positive electrode material layer 1 on the positive electrode mixture layer 5 side. Thereby, a laminated body (a laminated body of the negative electrode material layer-electrolyte material layer) in which the negative electrode current collector 6, the negative electrode mixture layer 7, and the electrolyte material layer 3 are provided in that order can be obtained. In this case, the laminated body 8 can be obtained by laminating the laminated body of the negative electrode material layer-electrolyte material layer and the positive electrode material layer 1 such that the electrolyte layer and the positive electrode mixture layer 5 are in contact with each other.

The laminated body 8 can also be obtained by laminating the laminated body of the positive electrode material layer-electrolyte material layer and the laminated body of the negative electrode material layer-electrolyte material layer such that the respective electrolyte material layers 3 thereof are in contact with each other.

The positive electrode material layer 1, the electrolyte material layer 3, and the negative electrode material layer 2 in the laminated body 8 may not overlap in a portion as long as there is a portion in which all of the layers are laminated. That is, the layers may be laminated in a state in which edges of the layers do not overlap as illustrated in FIG. 1(b).

Next, the obtained laminated body 8 is collectively cut (cutting step). In the cutting step, the laminated body 8 is collectively cut in a lamination direction from the positive electrode material layer 1 to the negative electrode material layer 2 (or from the negative electrode material layer 2 to the positive electrode material layer 1).

In the cutting step, the cutting may be mechanical cutting. "Mechanical cutting" refers to cutting by a cutting means (cutting device) having a blade capable of cutting the laminated body 8. The cutting means or the cutting device may be a means or a device having a blade formed of a metal such as stainless steel or titanium, a ceramic, or the like. More specifically, the cutting means or device may be scissors, a cutter knife, a rotary cutter, a puncher (punching device), or the like. The cutting may not include cutting by laser irradiation. When the cutting is performed using mechanical cutting, cut portions in the electrode layer and the electrolyte layer being melted by heat and adhering to each other can be suppressed.

In the cutting step, the laminated body 8 may be cut into any shape in a plan view. In a plan view, the laminated body 8 may be cut in a linear shape, may be cut in a curved shape, and may be punched into any shape such as a circular shape or a rectangular shape. That is, the cutting step can also be referred to as a step of collectively forming the laminated body 8 into an arbitrary shape.

When the laminated body 8 is collectively cut, a battery member 18A can be fabricated as illustrated in FIG. 1(c). The battery member 18A is an electrode group in which a positive electrode layer 11A (a positive electrode current collector 14A and a positive electrode mixture layer 15A), an electrolyte layer 13A, and a negative electrode layer 12A (a negative electrode mixture layer 17A and a negative electrode current collector 16A) are provided in that order.

In the manufacturing method of a secondary battery according to the present embodiment, following the battery member fabrication step, a positive electrode current collecting tab is attached to the positive electrode current collector 14A and a negative electrode current collecting tab is attached to the negative electrode current collector 16A in the obtained battery member 18A, and then the battery member 18A is housed in an exterior body (housing step; not illustrated). When the battery member 18A is housed in the exterior body in the housing step, the battery member 18A is housed in the exterior body such that the positive electrode current collecting tab and the negative electrode current collecting tab protrude from the inside of the exterior body to the outside so that the positive electrode layer 11A and the negative electrode layer 12A can be electrically connected to the outside of the secondary battery. When the process has passed the housing step, a laminate type secondary battery is manufactured.

The exterior body may be formed of, for example, a laminated film. The laminated film may be a laminated film in which, for example, a resin film such as a polyethylene terephthalate (PET) film, a metal foil such as aluminum, copper, or stainless steel, and a sealant layer such as polypropylene are laminated in that order.

One of the points of the manufacturing method of the secondary battery of the present embodiment that differs from a conventional manufacturing method is that the laminated body including the electrode material layers (the positive electrode material layer and the negative electrode material layer) and the electrolyte material layer is collectively cut when the battery member (electrode group) is fabricated. In the conventional manufacturing method, electrode layers and an electrolyte layer were each cut (formed) before lamination, and then the layers were laminated to manufacture the electrode group. Therefore, when the electrode layers and the electrolyte layer were laminated, there were cases in which positions of the layers deviated from each other, and it was difficult to suitably laminate the layers.

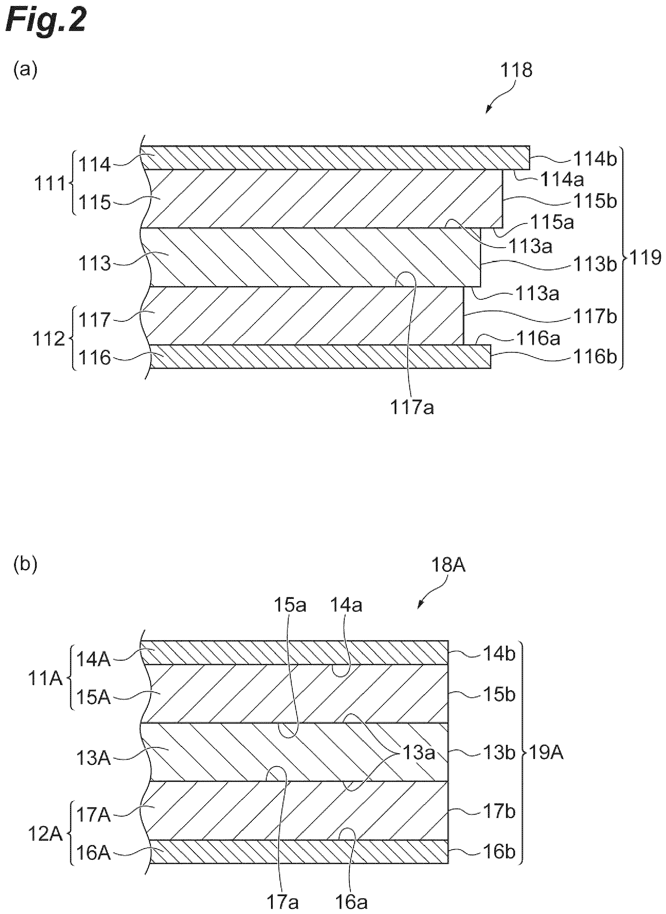

FIG. 2(a) is a schematic cross-sectional view illustrating a main part of a battery member obtained by a conventional manufacturing method of a secondary battery. A battery member 118 in FIG. 2(a) is an electrode group manufactured by fabricating each of a positive electrode layer 111 including a positive electrode current collector 114 and a positive electrode mixture layer 115, an electrolyte layer 113, and a negative electrode layer 112 including a negative electrode current collector 116 and a negative electrode mixture layer 117, cutting each of the layers separately, and then laminating the layers. In the battery member 118, the electrode layers 111 and 112, and the electrolyte layer 113 are each cut (formed), and then each of the layers is laminated to fabricate the battery member. Therefore, the layers cannot be easily laminated by accurately aligning positions of each layer, and as illustrated in FIG. 2(a), the positive electrode layer 111, the electrolyte layer 113, and the negative electrode layer 112 are laminated with their edges deviated from each other.

Also, in the positive electrode layer 111 and the negative electrode layer 112, the electrode mixture layers 115 and 117 may not be formed up to edges of the current collectors 114 and 116. Therefore, in the positive electrode layer 111 and the negative electrode layer 112, edges of the current collectors 114 and 116 and the electrode material mixture layers 115 and 117 may be laminated to be deviated from each other.

Due to the reason described above, when the battery member 118 is viewed from a direction perpendicular to the lamination direction, an end surface 114b of the positive electrode current collector 114, an end surface 115b of the positive electrode mixture layer 115, an end surface 113b of the electrolyte layer 113, an end surface 117b of the negative electrode mixture layer 117, and an end surface 116b of the negative electrode current collector 116 do not form a continuous surface. In other words, an end surface 119 of the battery member 118 including the above-described end surfaces 113b, 114b, 115b, 116b, and 117b (hereinafter, may be simply referred to as "end surface") does not form a continuous surface (a flat surface or a curved surface).

That is, in the battery member 118, when viewed from the lamination direction, any one of the positive electrode layer 111 (the positive electrode current collector 114 and the positive electrode mixture layer 115), the electrolyte layer 113, the negative electrode layer 112 (the negative electrode current collector 116 and the negative electrode mixture layer 117) protrudes. Alternatively, in the battery member 118, when viewed from the lamination direction, it can also be said that at least one surface of a surface 114a of the positive electrode current collector 114 on the positive electrode mixture layer 115 side, a surface 115a of the positive electrode mixture layer 115 on the electrolyte layer 113 side, one or both of the surfaces 113a of the electrolyte layer 113 (a surface on the positive electrode layer 111 side and a surface on the negative electrode layer 112 side), a surface 117a of the negative electrode mixture layer 117 on the electrolyte layer 113 side, and a surface 116a of the negative electrode current collector 116 on the negative electrode mixture layer 117 side is exposed.

On the other hand, FIG 2(b) is a schematic cross-sectional view illustrating a main part of the battery member obtained by the manufacturing method of the first embodiment. As described above, the battery member 18A is manufactured by collectively cutting the laminated body 8 after fabricating the laminated body 8 in which the positive electrode material layer 1, the electrolyte material layer 3, and the negative electrode material layer 2 are laminated. Therefore, when the battery member 18A is viewed from a direction perpendicular to the lamination direction, an end surface 14b of the positive electrode current collector 14A, an end surface 15b of the positive electrode mixture layer 15A, an end surface 13b of the electrolyte layer 13A, an end surface 17b of the negative electrode mixture layer 17A, and an end surface 16b of the negative electrode current collector 16A form a substantially continuous surface (a flat surface). In other words, an end surface 19A of the battery member 18A including the end surfaces 13b, 14b, 15b, 16b, and 17b is a substantially continuous surface (a flat surface) formed by collective cutting. That is, in the battery member 18A, when viewed from a direction perpendicular to the lamination direction, the end surface 14b of the positive electrode current collector 14A, the end surface 15b of the positive electrode mixture layer 15A, the end surface 13b of the electrolyte layer 13A, the end surface 17b of the negative electrode mixture layer 17A, and the end surface 16b of the negative electrode current collector 16A are aligned on one surface, thereby forming one substantially continuous surface. Further, "substantially continuous surface" in the present specification may be a continuous surface (a flat surface or a curved surface) to such an extent as to being formed as a cut surface when the laminated body is cut collectively.

When viewed from the lamination direction, it can also be said that the battery member 18A is laminated without any of the positive electrode layer 11A (the positive electrode current collector 14A and the positive electrode mixture layer 15A), the electrolyte layer 13A, and the negative electrode layer 12A (the negative electrode current collector 16A and the negative electrode mixture layer 17A) protruding. That is, when the battery member 18A is viewed from the lamination direction, any of a surface 14a of the positive electrode current collector 14A on the positive electrode mixture layer 15A side, a surface (a surface on the positive electrode current collector 14A side and a surface on the electrolyte layer 13A side) 15a of the positive electrode mixture layer 15A, a surface (a surface on the positive electrode layer 11A side and a surface on the negative electrode layer 12A side) 13a of the electrolyte layer 13A, a surface (a surface on the electrolyte layer 13A side and a surface on the negative electrode current collector 16A side) 17a of the negative electrode mixture layer 17A, and a surface 16a of negative electrode current collector 16A on the negative electrode mixture layer 17A side is not exposed.

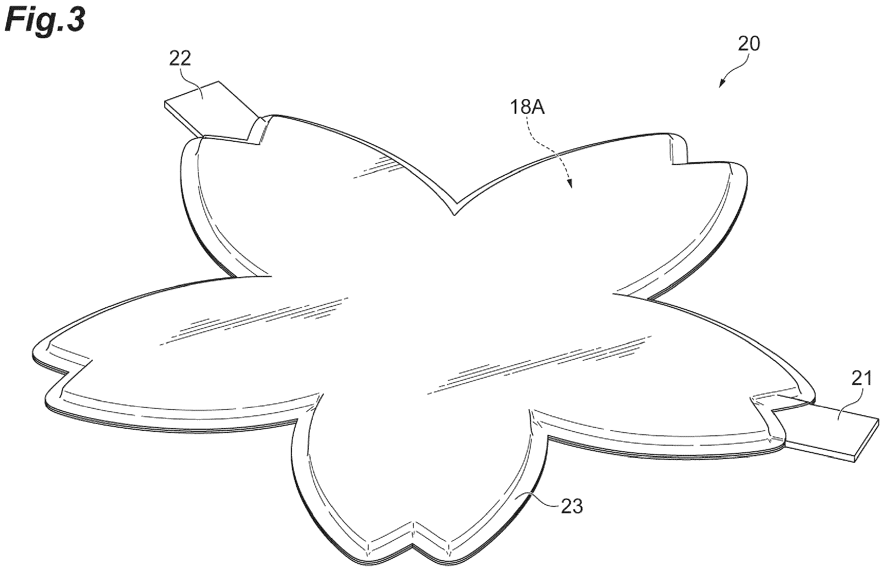

As described above, according to the manufacturing method of the battery member according to the present embodiment, it is possible to manufacture the battery member 18A in which positional deviations between the electrode layers 11A and 12A and the electrolyte layer 13A are small and the layers are suitably laminated. Particularly, the battery member 18A obtained by the manufacturing method is suitable for a case in which a secondary battery having a complicated shape is manufactured. FIG 3 is a perspective view illustrating an example of a secondary battery obtained by the manufacturing method of the first embodiment. A secondary battery 20 illustrated in FIG. 3 is a secondary battery in which a positive electrode current collecting tab 21 and a negative electrode current collecting tab 22 are provided in the battery member 18A obtained by the above-described manufacturing method and then the battery member 18A is housed in an exterior body 23. According to the manufacturing method of the present embodiment, even when a battery member has a complicated shape, since the positive electrode material layer 1, the negative electrode material layer 2, and the electrolyte material layer 3 are laminated and then the laminated body 8 is collectively cut, a positional deviation caused after the lamination can be eliminated, and as a result, the battery member 18A in which positional deviations between the positive electrode layer 11A, the electrolyte layer 13A, and the negative electrode layer 12A are suppressed can be easily manufactured. Along with this, according to the manufacturing method of the present embodiment, a secondary battery having a complicated shape as illustrated in FIG. 3 can also be easily manufactured.

Also, in the conventional manufacturing method, since steps of cutting and forming each of the positive electrode layer, the electrolyte layer, and the negative electrode layer were required, the number of steps was likely to increase and manufacturing costs were likely to increase. However, according to the manufacturing method of the present embodiment, since the battery member can be manufactured by collectively cutting the laminated body, the number of steps can be reduced and manufacturing costs can also be curtailed.

Next, a modified example of the battery member obtained by the manufacturing method of the first embodiment will be described. In the first embodiment described above, in a cross-sectional view of the laminated body 8, the laminated body 8 is cut in a straight line (so that a cut surface (the end surface 19A of the battery member 18A) is a plane parallel to the lamination direction of the laminated body 8) in the same direction as the lamination direction, but a cutting direction may not be the same direction as the lamination direction and may not be a straight line as long as the laminated body 8 is collectively cut.

A direction in which the laminated body 8 is cut may be a direction along the lamination direction of the laminated body 8. "Direction along the lamination direction" means a direction including the same direction as a direction in which the positive electrode material layer 1, the electrolyte material layer 3 and the negative electrode material layer 2 are laminated, and a direction inclined with respect to the direction in which the positive electrode material layer 1, the electrolyte material layer 3, and the negative electrode material layer 2 are laminated. "Cutting direction is inclined" means a case in which, when a tangent line is drawn on a straight line or a curved line corresponding to a cut surface of the laminated body 8 in a cross-sectional view, there is a tangent line in a direction different from the lamination direction. A degree of inclination of the cutting direction (an angle formed by the cutting direction with respect to the lamination direction) is not limited as long as it is such an extent that the laminated body 8 can be cut collectively. That is, a direction in which the laminated body 8 is cut may be a direction different from the lamination direction (a direction not parallel to the lamination direction).

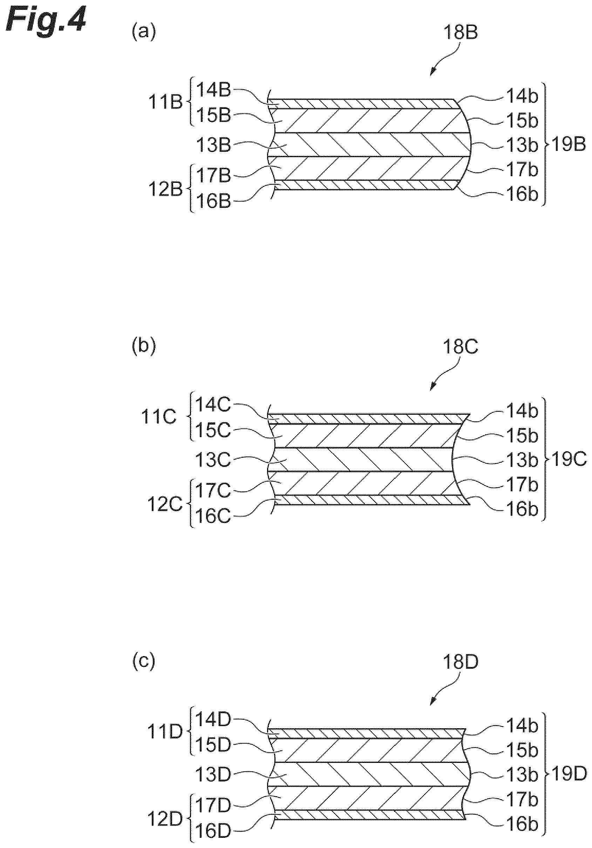

FIGS. 4 to 6 are schematic cross-sectional views of the battery members obtained in the manufacturing method of the secondary battery according to modified examples of the first embodiment. All of the battery members illustrated in FIGS. 4 to 6 are also battery members fabricated by the manufacturing method of a secondary battery including the above-described battery member fabrication step (including the laminated body fabrication step and the cutting step) and are also battery members (electrode groups) obtained as a result of cutting the laminated bodies in a direction along the lamination direction.

In a manufacturing method according to one modified example, the laminated body 8 may be cut in a curved shape in a cross-sectional view. In this case, for example, battery members as illustrated in FIG. 4 can be obtained. Further, in the manufacturing method according to this modified example, a cutting direction of the laminated body 8 may be intentionally curved or may be unintentionally (for example, an attempt was made to cut in a straight line in the lamination direction, but as a result) curved in a cross-sectional view.

Specifically, for example, in the cutting step, the laminated body 8 may be cut to be curved such that it bulges toward an outer side in a convex shape from an end surface of the laminated body 8 in a cross-sectional view. In this case, in an obtained battery member 18B, as illustrated in FIG. 4(a), an end surface 19B of the battery member 18B including an end surface 14b of a positive electrode current collector 14B, an end surface 15b of a positive electrode mixture layer 15B, an end surface 13b of an electrolyte layer 13B, an end surface 17b of a negative electrode mixture layer 17B, and an end surface 16b of a negative electrode current collector 16B forms a substantially continuous surface (a curved surface) that is curved to bulge toward an outer side in a convex shape in a cross-sectional view.

In the cutting step, in a cross-sectional view, the laminated body 8 may be cut to be curved such that it is recessed toward an inner side in a concave shape from an end surface of the laminated body 8. In this case, in an obtained battery member 18C, as illustrated in FIG. 4(b), an end surface 19C of the battery member 18C including an end surface 14b of a positive electrode current collector 14C, an end surface 15b of a positive electrode mixture layer 15C, an end surface 13b of an electrolyte layer 13C, an end surface 17b of a negative electrode mixture layer 17C, and an end surface 16b of a negative electrode current collector 16C forms a substantially continuous surface (a curved surface) that is curved to be recessed toward an inner side in a concave shape in a cross-sectional view.

In the cutting step, in a cross-sectional view, the laminated body 8 may be cut in a wave shape such that irregularities are repeated toward an outer side and an inner side from an end surface of the laminated body 8. In this case, in an obtained battery member 18D, as illustrated in FIG. 4(c), an end surface 19D of the battery member 18D including an end surface 14b of a positive electrode current collector 14D, an end surface 15b of a positive electrode mixture layer 15D, an end surface 13b of an electrolyte layer 13D, an end surface 17b of a negative electrode mixture layer 17D, and an end surface 16b of a negative electrode current collector 16D forms a substantially continuous surface (a curved surface) in a wave shape such that irregularities are repeated toward an outer side and an inner side in a cross-sectional view.

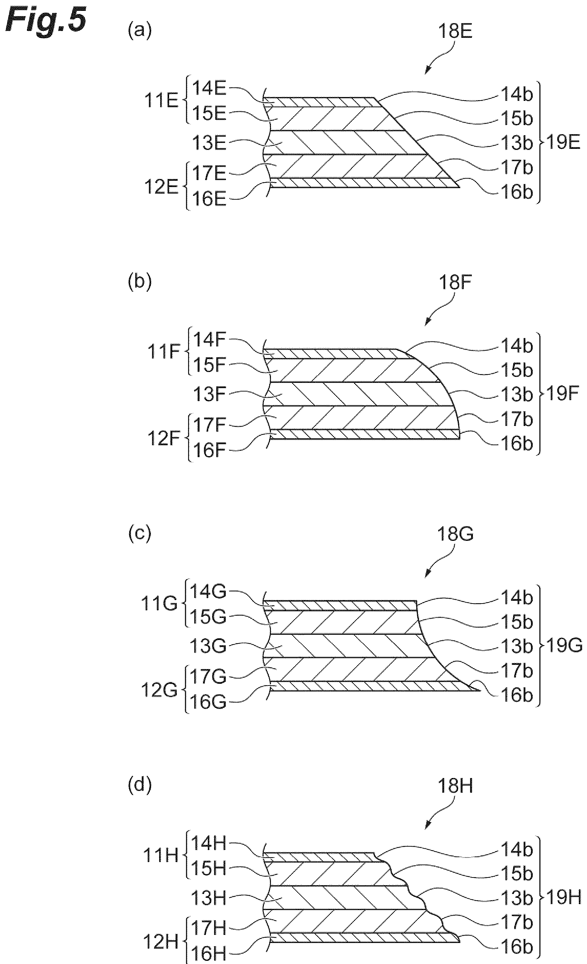

In a manufacturing method according to another modified example, the laminated body 8 may be cut linearly or in a curved shape in a direction which forms an angle larger than 90 degrees with respect to a surface of the laminated body 8 on the positive electrode material layer 1 side. In this case, for example, a battery member as illustrated in FIG. 5 can be obtained. Further, in the manufacturing method according to this modified example, in a cross-sectional view, a cutting direction of the laminated body 8 may intentionally be a direction which forms an angle larger than 90 degrees with respect to the surface of the laminated body 8 on the positive electrode material layer 1 side, or may unintentionally (for example, an attempt was made to cut in a direction of 90 degrees with respect to the surface of the laminated body 8 on the positive electrode material layer 1 side, but as a result) be a direction which forms an angle larger than 90 degrees with respect to the surface of the laminated body 8 on the positive electrode material layer 1 side.

Specifically, for example, in the cutting step, the laminated body 8 may be cut to be inclined linearly in a direction which forms an angle larger than 90 degrees with respect to the surface of the laminated body 8 on the positive electrode material layer 1 side in a cross-sectional view. In this case, in an obtained battery member 18E, as illustrated in FIG. 5(a), an end surface 19E of the battery member 18E including an end surface 14b of a positive electrode current collector 14E, an end surface 15b of a positive electrode mixture layer 15E, an end surface 13b of an electrolyte layer 13E, an end surface 17b of a negative electrode mixture layer 17E, and an end surface 16b of a negative electrode current collector 16E forms a substantially continuous surface (a flat surface) that is inclined to form an angle larger than 90 degrees with respect to a surface of the battery member 18E on a positive electrode layer 11E side (to extend toward a negative electrode layer 12E from the positive electrode layer 11E) in a cross-sectional view.

In the cutting step, the laminated body 8 may be cut to be inclined in a curved shape in a direction which forms an angle larger than 90 degrees with respect to the surface of the laminated body 8 on the positive electrode material layer 1 side in a cross-sectional view. In this case, in a battery member 18F according to one modified example, as illustrated in FIG. 5(b), an end surface 19F of the battery member 18F including an end surface 14b of a positive electrode current collector 14F, an end surface 15b of a positive electrode mixture layer 15F, an end surface 13b of an electrolyte layer 13F, an end surface 17b of a negative electrode mixture layer 17F, and an end surface 16b of a negative electrode current collector 16F forms a substantially continuous surface (a curved surface) that is curved to bulge in a convex shape toward an outer side of the battery member 18F while being inclined to form an angle larger than 90 degrees with respect to a surface of the battery member 18F on a positive electrode layer 11F side (to extend toward a negative electrode layer 12F from the positive electrode layer 11F) in a cross-sectional view. Further, when a cut surface (end surface of the battery member) is in a curved shape in a cross-sectional view, an angle formed by the cut surface (end surface of the battery member) with respect to the surface of the laminated body 8 on the positive electrode material layer 1 side is defined as an angle formed by a tangent line of the curve with respect to the surface of the laminated body 8 on the positive electrode material layer 1 side (the same applies hereinafter).

In the cutting step, when the laminated body 8 is cut to be inclined in a curved shape in a direction which forms an angle larger than 90 degrees with respect to the surface of the laminated body 8 on the positive electrode material layer 1 side in a cross-sectional view, in a battery member 18G according to another modified example, as illustrated in FIG. 5(c), an end surface 19G of the battery member 18G including an end surface 14b of a positive electrode current collector 14G, an end surface 15b of a positive electrode mixture layer 15G, an end surface 13b of an electrolyte layer 13G, an end surface 17b of a negative electrode mixture layer 17G, and an end surface 16b of a negative electrode current collector 16G forms a substantially continuous surface (a curved surface) that is curved to be recessed in a concave shape toward an inner side of the battery member 18G while being inclined to form an angle larger than 90 degrees with respect to a surface of the battery member 18G on a positive electrode layer 11G side (to extend toward a negative electrode layer 12G from the positive electrode layer 11G) in a cross-sectional view.

In the cutting step, when the laminated body 8 is cut to be inclined in a curved shape in a direction which forms an angle larger than 90 degrees with respect to the surface of the laminated body 8 on the positive electrode material layer 1 side in a cross-sectional view, in a battery member 18H according to another modified example, as illustrated in FIG. 5(d), an end surface 19H of the battery member 18H including an end surface 14b of a positive electrode current collector 14H, an end surface 15b of a positive electrode mixture layer 15H, an end surface 13b of an electrolyte layer 13H, an end surface 17b of a negative electrode mixture layer 17H, and an end surface 16b of a negative electrode current collector 16H forms a substantially continuous surface (a curved surface) in a wave shape such that irregularities are repeated toward an outer side and an inner side of the battery member 18H while being inclined to form an angle larger than 90 degrees with respect to a surface of the battery member 18H on a positive electrode layer 11H side (to extend toward a negative electrode layer 12H from the positive electrode layer 11H) in a cross-sectional view.

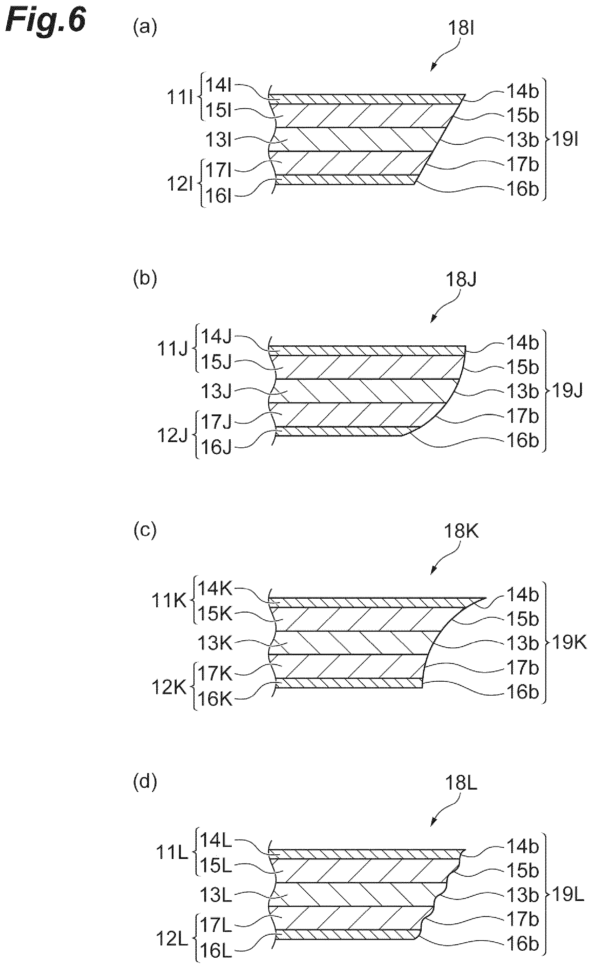

In a manufacturing method according to still another modified example, the laminated body 8 may be cut linearly or in a curved shape in a direction which forms an angle smaller than 90 degrees with respect to the surface of the laminated body 8 on the positive electrode material layer 1 side. In this case, for example, a battery member as illustrated in FIG. 6 can be obtained. Further, in the manufacturing method according to this modified example, in a cross-sectional view, a cutting direction of the laminated body 8 may intentionally be a direction which forms an angle smaller than 90 degrees with respect to the surface of the laminated body 8 on the positive electrode material layer 1 side, or may unintentionally (for example, an attempt was made to cut in a direction of 90 degrees with respect to the surface of the laminated body 8 on the positive electrode material layer 1 side, but as a result) be a direction which forms an angle smaller than 90 degrees with respect to the surface of the laminated body 8 on the positive electrode material layer 1 side.

Specifically, for example, in the cutting step, the laminated body 8 may be cut to be inclined linearly in a direction which forms an angle smaller than 90 degrees with respect to the surface of the laminated body 8 on the positive electrode material layer 1 side in a cross-sectional view. In this case, in an obtained battery member 181, as illustrated in FIG. 6(a), an end surface 191 of the battery member 181 including an end surface 14b of a positive electrode current collector 141, an end surface 15b of a positive electrode mixture layer 151, an end surface 13b of an electrolyte layer 131, an end surface 17b of a negative electrode mixture layer 171, and an end surface 16b of a negative electrode current collector 161 forms a substantially continuous surface (a flat surface) inclined to form an angle smaller than 90 degrees with respect to a surface of the battery member 181 on a positive electrode layer 11I side (to contract from the positive electrode layer 11I toward a negative electrode layer 121) in a cross-sectional view.

In the cutting step, the laminated body 8 may be cut to be inclined in a curved shape in a direction which forms an angle smaller than 90 degrees with respect to the surface of the laminated body 8 on the positive electrode material layer 1 side in a cross-sectional view. In this case, in a battery member 18J according to one modified example, as illustrated in FIG. 6(b), an end surface 19J of the battery member 18J including an end surface 14b of a positive electrode current collector 14J, an end surface 15b of a positive electrode mixture layer 15J, an end surface 13b of an electrolyte layer 13J, an end surface 17b of a negative electrode mixture layer 17J, and an end surface 16b of a negative electrode current collector 16J forms a substantially continuous surface (a curved surface) that is curved to bulge in a convex shape toward an outer side of the battery member 18J while being inclined to form an angle smaller than 90 degrees with respect to a surface of the battery member 18J on a positive electrode layer 11J side (to contract from the positive electrode layer 11J toward a negative electrode layer 12J) in a cross-sectional view.

In the cutting step, when the laminated body 8 is cut to be inclined in a curved shape in a direction which forms an angle smaller than 90 degrees with respect to the surface of the laminated body 8 on the positive electrode material layer 1 side in a cross-sectional view, in a battery member 18K according to another modified example, as illustrated in FIG. 6(c), an end surface 19K of the battery member 18K including an end surface 14b of a positive electrode current collector 14K, an end surface 15b of a positive electrode mixture layer 15K, an end surface 13b of an electrolyte layer 13K, an end surface 17b of a negative electrode mixture layer 17K, and an end surface 16b of a negative electrode current collector 16K forms a substantially continuous surface (a curved surface) that is curved to be recessed in a concave shape toward an inner side of the battery member 18K while being inclined to form an angle smaller than 90 degrees with respect to a surface of the battery member 18K on a positive electrode layer 11K side (to contract from the positive electrode layer 11K toward a negative electrode layer 12K) in a cross-sectional view.

In the cutting step, when the laminated body 8 is cut to be inclined in a curved shape in a direction which forms an angle smaller than 90 degrees with respect to the surface of the laminated body 8 on the positive electrode material layer 1 side in a cross-sectional view, in a battery member 18L according to another modified example, as illustrated in FIG. 6(d), an end surface 19L of the battery member 18L including an end surface 14b of a positive electrode current collector 14L, an end surface 15b of a positive electrode mixture layer 15L, an end surface 13b of an electrolyte layer 13L, an end surface 17b of a negative electrode mixture layer 17L, and an end surface 16b of a negative electrode current collector 16L forms a substantially continuous surface (a curved surface) in a wave shape such that irregularities are repeated toward an outer side and an inner side of the battery member 18L while being inclined to form an angle smaller than 90 degrees with respect to a surface of the battery member 18L on a positive electrode layer 11L side (to contract from the positive electrode layer 11L toward a negative electrode layer 12L) in a cross-sectional view.

Also in the manufacturing method according to any of the modified examples described above, since the laminated body 8 is collectively cut in a direction along the lamination direction in the cutting step, battery members obtained by these manufacturing methods and secondary batteries including these battery members achieve the same operation and effects as the battery member and the secondary battery obtained by the manufacturing method according to the first embodiment described above.

### [Second embodiment]

Next, a manufacturing method of a secondary battery according to a second embodiment will be described. In a secondary battery according to the second embodiment, a battery member includes a so-called bipolar electrode layer. That is, the secondary battery is a bipolar type secondary battery including a positive electrode layer, a first electrolyte layer, a bipolar electrode layer, a second electrolyte layer, and a negative electrode layer in that order. The bipolar electrode layer includes a bipolar electrode current collector, a positive electrode mixture layer provided on one surface of the bipolar electrode current collector, and a negative electrode mixture layer provided on the other surface of the bipolar electrode current collector.

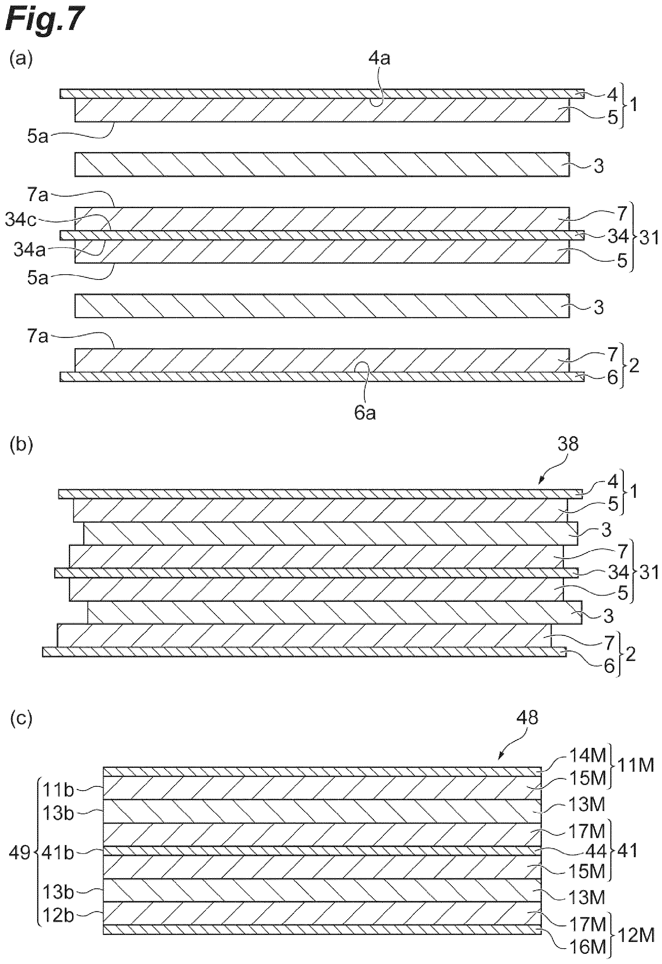

In the manufacturing method according to the second embodiment, first, a battery member is fabricated (battery member fabrication step). FIG 7 illustrates schematic cross-sectional views showing a battery member fabrication step in the manufacturing method of a secondary battery according to the second embodiment. In the battery member fabrication step, first, as illustrated in FIGS. 7(a) and 7(b), electrolyte material layers 3 and a bipolar electrode material layer 31 are provided between a pair of electrode material layers (between a positive electrode material layer 1 and a negative electrode material layer 2) to fabricate a laminated body 38 (laminated body fabrication step).

In the laminated body fabrication step, first, as illustrated in FIG. 7(a), the positive electrode material layer 1, the negative electrode material layer 2, a first electrolyte material layer 3, a second electrolyte material layer 3, and a bipolar electrode material layer 31 are each fabricated.

Methods of fabricating the positive electrode material layer 1, the negative electrode material layer 2, and the electrolyte material layers 3 may be the same as the fabrication methods of those in the first embodiment. A composition of the first electrolyte material layer 3 and a composition of the second electrolyte material layer 3 may be the same as or different from each other.

In one embodiment, the bipolar electrode material layer 31 is fabricated by forming a positive electrode mixture layer 5 on one surface 34a of a bipolar electrode current collector 34 and forming a negative electrode mixture layer 7 on the other surface 34c of the bipolar electrode current collector 34. A method of forming the positive electrode mixture layer 5 and the negative electrode mixture layer 7 on the bipolar electrode current collector 34 may be the same as a method of forming a positive electrode mixture layer 5 on one surface 4a of a positive electrode current collector 4 and a method of forming a negative electrode mixture layer 7 on one surface 6a of a negative electrode current collector 6.

The bipolar electrode current collector 34 may be formed of a metal simple substance such as aluminum, stainless steel, or titanium, a clad material obtained by rolling and bonding aluminum and copper or stainless steel and copper, or the like. A thickness of the bipolar electrode current collector 34 may be 10 µm or more and 100 µm or less.

The positive electrode mixture layer 5 and the negative electrode mixture layer 7 in the bipolar electrode material layer 31 may respectively have the same composition as the positive electrode mixture layer 5 and the negative electrode mixture layer 7 in the positive electrode material layer 1 and the negative electrode material layer 2. The composition of the positive electrode mixture layer 5 in the bipolar electrode material layer 31 may be the same as or different from the composition of the positive electrode mixture layer 5 in the positive electrode material layer 1, and the composition of the negative electrode mixture layer 7 in the bipolar electrode material layer 31 may be the same as or different from the composition of the negative electrode mixture layer 7 in the negative electrode material layer 2.

Next, as illustrated in FIG. 7(b), the positive electrode material layer 1, the first electrolyte material layer 3, the bipolar electrode material layer 31, the second electrolyte material layer 3, and the negative electrode material layer 2 are laminated in that order to fabricate the laminated body 38. At this time, as for the bipolar electrode material layer 31, the positive electrode mixture layer 5 of the bipolar electrode material layer 31 is disposed to face the negative electrode mixture layer 7 side of the negative electrode material layer 2, and the negative electrode mixture layer 7 of the bipolar electrode material layer 31 is disposed to face the positive electrode mixture layer 5 side of the positive electrode material layer 1. When the laminated body 38 is fabricated, the laminated body 38 may be fabricated by forming the electrolyte material layer 3 on at least one surface of a surface 5a of the positive electrode material layer 1 on the positive electrode mixture layer 5 side, a surface 7a of the bipolar electrode material layer 31 on the negative electrode mixture layer 7 side, a surface 5a of the bipolar electrode material layer 31 on the positive electrode mixture layer 5 side, and a surface 7a of the negative electrode material layer 2 on the negative electrode mixture layer 7 side.

Also in the laminated body 38, the positive electrode material layer 1, the first electrolyte material layer 3, the bipolar electrode material layer 31, the second electrolyte material layer 3, and the negative electrode material layer 2 may not overlap in a portion as long as there is a portion in which all of the layers are laminated. That is, the layers may be laminated in a state in which edges of the layers do not overlap as illustrated in FIG. 7(b).

Next, the obtained laminated body 38 is collectively cut (cutting step). In the cutting step, the laminated body 38 is collectively cut in a lamination direction from the positive electrode material layer 1 to the negative electrode material layer 2 (or from the negative electrode material layer 2 to the positive electrode material layer 1). A method of cutting the laminated body 38 may be the same as the method of cutting the laminated body 8 in the first embodiment.

When the laminated body 38 is collectively cut, a battery member (bipolar battery member) 48 for a secondary battery can be fabricated as illustrated in FIG. 7(c). The bipolar battery member 48 is an electrode group (bipolar electrode group) including a positive electrode layer 11M (a positive electrode current collector 14M and a positive electrode mixture layer 15M), a first electrolyte layer 13M, a bipolar electrode layer 41 (a negative electrode mixture layer 17M, a bipolar electrode current collector 44, and a positive electrode mixture layer 15M), and a negative electrode layer 12M (a negative electrode current collector 16M and a negative electrode mixture layer 17M) in that order.

In the manufacturing method of a secondary battery according to the second embodiment, following the battery member fabrication step, a positive electrode current collecting tab is attached to the positive electrode current collector 14K and a negative electrode current collecting tab is attached to the negative electrode current collector 16K in the obtained bipolar battery member 48, and then the battery member 48 is housed in an exterior body (housing step. not illustrated). The housing step may be implemented using the same method as the housing step according to the first embodiment. When the process has passed the housing step, a bipolar type secondary battery is manufactured.

As described above, the bipolar battery member 48 in the bipolar type secondary battery also is manufactured by collectively cutting the laminated body 38 after fabricating the laminated body 38 in which the positive electrode material layer 1, the first electrolyte material layer 3, and the bipolar electrode material layer 31, the second electrolyte material layer 13, and the negative electrode material layer 2 are laminated. Therefore, when viewed from a direction perpendicular to the lamination direction of the bipolar battery member 48, an end surface 49 of the bipolar battery member 48 including an end surface 11b of the positive electrode layer 11M, an end surface 13b of the first electrolyte layer 13M, an end surface 41b of the bipolar electrode layer 41, an end surface 13b of the second electrolyte layer 13M, and an end surface 12b of the negative electrode layer 12M is a substantially continuous surface (a flat surface) formed by cutting.

When viewed from the lamination direction, it can also be said that the bipolar battery member 48 is laminated without any of the positive electrode layer 11M (the positive electrode current collector 14M and the positive electrode mixture layer 15M), the first electrolyte layer 13M, the bipolar electrode layer 41 (the bipolar electrode current collector 44, the positive electrode mixture layer 15M, and the negative electrode mixture layer 17M), the second electrolyte layer 13M, and the negative electrode layer 12M (the negative electrode current collector 16M and the negative electrode mixture layer 17M) protruding. That is, when viewed from the lamination direction, any of a surface of the positive electrode current collector 14M on the positive electrode mixture layer 15M side in the positive electrode layer 11M, a surface of the positive electrode mixture layer 15A (a surface on the positive electrode current collector 14M side and a surface on the first electrolyte layer 13M side) in the positive electrode layer 11M, a surface of the first electrolyte layer 13M (a surface on the positive electrode layer 11M side and a surface on the bipolar electrode layer 41 side), a surface of the negative electrode mixture layer 17M (a surface on the first electrolyte layer 13M side and a surface on the bipolar electrode current collector 44 side) in the bipolar electrode layer 41, a surface of the bipolar electrode current collector 44 (a surface on the negative electrode mixture layer 17M side and a surface on the positive electrode mixture layer 15M side), a surface of the positive electrode mixture layer 15M (a surface on the bipolar electrode current collector 44 side and a surface on the second electrolyte layer 13M side) in the bipolar electrode layer 41, a surface of the negative electrode mixture layer 17A (a surface on the second electrolyte layer 13M side and a surface on the negative electrode current collector 16M side) in the negative electrode layer 12M, and a surface of the negative electrode current collector 16M on the negative electrode mixture layer 17M side in the negative electrode layer 12M is not exposed.

As described above, in the manufacturing method of the bipolar type secondary battery according to the present embodiment, it is possible to manufacture the bipolar battery member in which positional deviations between the electrode layers and the electrolyte layers are small and the layers are suitably laminated. According to the manufacturing method of the present embodiment, even when a battery member has a complicated shape, since layers of the electrode material layers and the electrolyte material layers are each laminated and then the laminated body is collectively cut, positional deviations caused after the lamination can be eliminated, and as a result, the bipolar battery member 48 in which positional deviations between the positive electrode layer 11M, the first electrolyte layer 13M, the bipolar electrode layer 41, the second electrolyte layer 13M, and the negative electrode layer 12M are suppressed can be easily manufactured. Along with this, according to the manufacturing method of the present embodiment, a bipolar type secondary battery having a complicated shape can be easily manufactured.

Also, according to the manufacturing method of the present embodiment, since the bipolar battery member 48 can be fabricated by collectively cutting the laminated body 38, the number of steps can be reduced and manufacturing costs can be curtailed.

The battery member (bipolar type secondary battery) according to the second embodiment also may have modified examples as those illustrated in FIGS. 4 to 6 described in the first embodiment. That is, a direction in which the laminated body 38 is cut may be a direction along the lamination direction of the laminated body 38, and the end surface 49 of the bipolar battery member 48 including the end surface 11b of the positive electrode layer 11M, the end surface 13b of the first electrolyte layer 13M, the end surface 41b of the bipolar electrode layer 41, the end surface 13b of the second electrolyte layer 13M, and the end surface 12b of the negative electrode layer 12M may be a substantially continuous surface (a flat surface or a curved surface) as in the modified examples illustrated in FIGS. 4 to 6. Also in the case of these modified examples, the same operation and effects as in the battery member 48 (bipolar type secondary battery) obtained by the manufacturing method according to the second embodiment described above are achieved.

### Reference Signs List

1 Positive electrode material layer
2 Negative electrode material layer
3 Electrolyte material layer
11 Positive electrode layer
12 Negative electrode layer
13 Electrolyte layer
8, 38 Laminated body
18, 48 Battery member for secondary battery
19, 49 End surface of battery member when viewed from direction perpendicular to lamination direction
20 Secondary battery

## Claims

1. A manufacturing method of a battery member for a secondary battery comprising:
fabricating a laminated body by providing an electrolyte material layer between a pair of electrode material layers; and
collectively cutting the laminated body.

2. The manufacturing method according to claim 1, wherein the cutting is mechanical cutting.

3. The manufacturing method according to claim 1 or 2, wherein the electrolyte material layer comprises a polymer, an electrolyte salt, and a solvent.

4. A manufacturing method of a secondary battery comprising housing the battery member obtained by the manufacturing method according to any one of claims 1 to 3 in an exterior body.

5. A battery member for a secondary battery comprising:
a pair of electrode layers; and
an electrolyte layer provided between the electrode layers, wherein
an end surface of the battery member when the battery member is viewed from a direction perpendicular to a lamination direction forms a substantially continuous surface.

6. The battery member according to claim 5, wherein the electrolyte layer contains a polymer, an electrolyte salt, and a solvent.

7. A secondary battery comprising:
the battery member according to claim 5 or 6; and
an exterior body configured to house the battery member.
